# EUROPÄISCHE PATENTSCHRIFT

(11) **EP 4 201 803 B1**
(45) Veröffentlichungstag und Bekanntmachung des Hinweises auf die Patenterteilung: **24.06.2026**
(21) Anmeldenummer: 22215886.7
(22) Anmeldetag: 22.12.2022
(51) Int. Cl.: B63H 21/17, B63H 20/00, H02K 5/173, H02K 5/08, B63H 1/22

(54) **BOOTSANTRIEB**
BOAT DRIVE
PROPULSION DE BATEAU

(30) Priorität: 22.12.2021 DE 102021134418
(43) Veröffentlichungstag der Anmeldung: 28.06.2023
(73) Patentinhaber: Torqeedo GmbH, 82234 Wessling (DE)
(72) Erfinder: Spengler, Anton, 82234 Weßling (DE); Heller, Johannes, 82234 Weßling (DE); Despineux, Frank, 82234 Weßling (DE)
(74) Vertreter: Nordmeyer, Philipp Werner

(56) Entgegenhaltungen:
- EP-A1- 1 455 434
- WO-A1-2021/164522
- WO-A1-2022/044259
- CN-A- 109 687 623
- CN-U- 206 820 580
- CN-U- 214 506 787
- CN-U- 214 543 912
- CN-U- 214 755 756
- JP-A- 2000 156 952
- JP-A- 2013 066 252
- JP-A- H1 016 886
- US-A1- 2021 006 120
- US-A1- 2021 391 760

## Beschreibung

### Technisches Gebiet

Die vorliegende Erfindung betrifft einen elektrischen Bootsantrieb für ein Wasserfahrzeug, umfassend ein Antriebsgehäuse aus einem ersten metallischen Werkstoff und eine Propellerwelle aus einem zweiten metallischen Werkstoff, wobei die Propellerwelle mittels eines ersten Wellenlagers und eines zweiten Wellenlagers im Antriebsgehäuse gelagert ist. Der Bootsantrieb kann zum Antrieb eines Wasserfahrzeugs vorgesehen sein und beispielsweise in Form eines Außenbordantriebs oder eines Pod-Antriebs oder eines Innenbordantriebs bereitgestellt werden.

### Stand der Technik

Bei der Ausgestaltung von Schiffskomponenten, die ganz oder teilweise in Kontakt mit Wasser, insbesondere Meerwasser, kommen können, spielt die Vermeidung der galvanischen Korrosion eine wichtige Rolle. Bei der galvanischen Korrosion handelt es sich um die Zersetzung von Metall aufgrund unterschiedlicher galvanischer Potentiale der unterschiedlichen Metallwerkstoffe, wenn diese gemeinsam in einen Flüssigkeitsleiter (Elektrolyt) getaucht und miteinander kurzgeschlossen sind. Die galvanische Korrosion kann dazu führen, dass zumindest einer der Metallwerkstoffe zersetzt und möglicherweise vollständig aufgelöst wird, wobei sich die Metallionen dann typischerweise an dem mindestens einen anderen Metallwerkstoff ansammeln.

Genauer gesagt wird dabei das Metall mit niedrigerem Potential zu einer Anode einer galvanischen Zelle, wobei an der Anode eine Oxidation abläuft. Aluminium mit einem Potential von - 1,5 Volt gibt beispielsweise über Eisen mit einem Potential von - 0,5 Volt Elektronen an Akzeptoren (z. B. Sauerstoff) im Meerwasser ab. Während das Anoden-Material Aluminium in Lösung geht, bleibt das Eisen dann unangegriffen.

Daher sind an Wasserfahrzeugen häufig Opferanoden angebracht, die eine Metalloberfläche mit einem niedrigeren elektrischen Potential, als das andernfalls angegriffene Metall, bereitstellen, wodurch die galvanische Korrosion gezielt auf die Opferanoden umgeleitet und das andernfalls angegriffene Metall geschont wird.

Die Verwendung von Opferanoden bietet allerding nicht immer einen vollständigen Schutz gegen Korrosion. Darüber hinaus sind Opferanoden gerade bei kleinen Wasserfahrzeuge unhandlich und müssen zusätzlich regelmäßig überprüft und ersetzt werden. Daher werden häufig Materialpaarungen mit unterschiedlichem elektrischen Potential von vornherein vermieden, was jedoch dazu führen kann, dass unnötig hochwertige und entsprechend teure Materialien verwendet werden.

Dokumente WO 2022/044259 A1, US 2021/006120 A1, CN 109 687 623 A, WO 2021/164522 A1, JP 2000 156952 A, CN 214 543 912 U, CN 206 820 580 U, JP 2013 066252 A, CN 214 506 787 U, EP 1 455 434 A1, CN 214 755 756 U, US 2021/391760 A1 und JP H10 16886 A stellen relevante Stand der Technik dar.

### Darstellung der Erfindung

Ausgehend von dem bekannten Stand der Technik ist es eine Aufgabe der vorliegenden Erfindung, einen verbesserten elektrischen Bootsantrieb Bootsantriebbereitzustellen.

Die Aufgabe wird durch einen elektrischen Bootsantrieb für ein Wasserfahrzeug mit den Merkmalen des Anspruchs 1 gelöst. Vorteilhafte Weiterbildungen ergeben sich aus den Unteransprüchen, der Beschreibung und den Figuren.

Entsprechend wird ein Bootsantrieb für ein Wasserfahrzeug vorgeschlagen, der ein Antriebsgehäuse aus einem ersten metallischen Werkstoff und eine Propellerwelle aus einem zweiten metallischen Werkstoff umfasst, wobei die Propellerwelle im Antriebsgehäuse gelagert ist und einen Antriebspropeller umfasst, wobei der Antriebspropeller direkt auf der Propellerwelle befestigt sein kann.

Erfindungsgemäß umfasst der elektrische Bootsantrieb einen Propellerwellenisolator, der ausgebildet und eingerichtet ist, die Propellerwelle von dem Antriebsgehäuse und die Propellerwelle von dem Antriebspropeller elektrisch zu isolieren.

Unter einem ersten metallischen Werkstoff und einem zweiten metallischen Werkstoff können im Sinne der vorliegenden Offenbarung metallische Werkstoffe gemeint sein, die eine Werkstoffpaarung mit unterschiedlichem elektrischen Potential ausbilden. Das Werkstoffpaar kann hier so gewählt sein, dass das elektrische Potential, auch Standardpotential genannt, zwischen ihnen so groß ist, dass bei einem leitenden Kontakt, insbesondere in Seewasser oder Meerwasser, eine galvanische Korrosion stattfindet.

Für die Ausbildung einer galvanischen Korrosion bedarf es grundsätzlich dreier Komponenten, nämlich einer Anode, einer Kathode und eines Elektrolyts sowie einer elektrischen Verbindung zwischen Anode und Kathode.

Dieser Aufbau ist bei einem herkömmlichen Bootsantrieb mit einem metallischen Antriebsgehäuse und einer metallischen Propellerwelle, die beide gemeinsam in Wasser eintauchen, typischer Weise gegeben.

Durch die Bereitstellung des Propellerwellenisolators wird erreicht, dass die elektrische Verbindung zwischen Propellerwelle und Antriebsgehäuse, also gewissermaßen zwischen Anode und Kathode, unterbrochen wird. Mit anderen Worten wirkt der Propellerwellenisolator dahingehend, dass eine galvanische Korrosion zwischen Propellerwelle und Antriebsgehäuse auch bei gemeinsamem Eintauchen in Wasser unterbunden wird, weil die elektrische Verbindung zwischen Propellerwelle und Antriebsgehäuse unterbrochen ist.

Mit anderen Worten, dadurch, dass der elektrische Bootsantrieb einen Propellerwellenisolator umfasst, der ausgebildet und eingerichtet ist, die Propellerwelle von dem Antriebsgehäuse elektrisch zu isolieren, kann der metallische Werkstoff mit dem niedrigeren Potential nicht zur Anode werden, da keine elektrische Verbindung zum metallischen Werkstoff mit dem höheren Potential vorhanden ist. Anders formuliert kann durch die elektrische Isolation, bzw. die fehlende elektrische Verbindung, kein elektrochemischer Gradient ausgebildet werden, der eine galvanische Korrosion am metallischen Werkstoff mit dem niedrigeren elektrischen Potential in Gang setzen könnte.

Der Erfindungsgedanke beruht also darauf, die Ausbildung einer galvanischen Zelle nicht wasserseitig zu unterbinden oder auf eine Opferanode umzulenken, , sondern in Abkehr davon die Ausbildung einer galvanischen Zelle gezielt auf der feststofflichen Seite zu unterbinden. Dies geschieht durch die interne Isolation des metallischen Werkstoffs mit dem niedrigeren elektrischen Potential vom metallischen Werkstoff mit dem höherem elektrischen Potential.

Dies hat zunächst den Vorteil, dass keine Opferanoden verwendet werden müssen. Ferner hat dies den Vorteil, dass grundsätzlich beliebige Werkstoffpaarungen für das Antriebsgehäuse und die Propellerwelle in Betracht kommen können, selbst wenn sowohl Antriebsgehäuse und Propellerwelle gleichzeitig ganz oder teilweise in Wasser eingetaucht sind. Im Ergebnis können dadurch die für Propellerwelle und Antriebsgehäuse jeweils mechanisch, fertigungstechnisch und kostenmäßig optimalen Werkstoffe herangezogen werden. Dadurch können Kosten, Gewicht und Herstellungsverfahren optimiert werden.

Dadurch, dass der Propellerwellenisolator ausgebildet und eingerichtet ist, die Propellerwelle von dem Antriebsgehäuse elektrisch zu isolieren, kann das Antriebsgehäuse gezielt so dimensioniert und konstruiert werden, dass das Antriebsgehäuse ganz oder teilweise in Kontakt mit Wasser kommen kann. Letztlich ist dadurch eine größere Gestaltungsfreiheit des Antriebsgehäuses und eines gegebenenfalls zusätzlich vorhandenen Gehäuses möglich, da das Antriebsgehäuse nicht aufgrund von Korrosionsvermeidung vor Wasserkontakt abgeschirmt sein muss.

Gemäß einer bevorzugten Weiterbildung weist der erste metallische Werkstoff Aluminium und der zweite metallische Werkstoff Stahl auf. Obwohl die Werkstoffpaarung Aluminium-Stahl eine elektrische Potentialdifferenz von etwa 1 Volt aufweist, was grundsätzlich ausreichend ist, um eine galvanische Korrosion hervorzurufen, kann eine solche Korrosion aufgrund des erfindungsgemäßen Propellerwellenisolators unterbunden werden.

Dadurch, dass der erste metallische Werkstoff Aluminium aufweist, kann das Antriebsgehäuse etwa aus einer Aluminiumlegierung hergestellt sein. Durch die Verwendung von Aluminium bzw. einer Aluminiumlegierung als Material für das Antriebsgehäuse können Fertigungskosten und Gesamtgewicht des elektrischen Bootsantriebs eingespart werden. Dadurch, dass der zweite metallische Werkstoff Stahl aufweist, kann die Propellerwelle etwa aus einer Stahllegierung hergestellt sein. Durch die Verwendung von Stahl oder einer Stahllegierung als Material für die Propellerwelle kann diese selbst bei kleiner Dimensionierung besonders hohe Drehmomente übertragen.

Gemäß einer vorteilhaften Weiterbildung kann der Propellerwellenisolator Kunststoff, Kautschuk, Glas und/oder einen Keramikwerkstoff umfassen. Dadurch kann eine elektrische Isoliereigenschaft des Propellerwellenisolators gewährleistet werden. Ein Keramikwerkstoff im Sinne der vorliegenden Offenbarung kann etwa Aluminiumoxid Al₂O₃ umfassen.

Gemäß einer Ausführungsform kann die Propellerwelle im Antriebsgehäuse mittels eines ersten Wellenlagers und beispielsweise eines zweiten Wellenlagers gelagert sein. Es können aber auch mehrere Wellenlager vorgesehen sein.

Gemäß einer Ausführungsform des elektrischen Bootsantriebs kann das erste Wellenlager und/oder das zweite Wellenlager einen Innenring und einen Außenring aufweisen, wobei der

Innenring und/oder der Außenring des ersten Wellenlagers und/oder des zweiten Wellenlagers als Propellerwellenisolator ausgeführt sind.

Diese Ausführungsform des elektrischen Bootsantriebs kann beispielsweise Wellenlager umfassen, die als Gleitlager ausgebildet sind. Gleichwohl können die Lager gemäß dieser Ausführungsform auch als Wälzlager ausgeführt sein.

Mit der Formulierung "als Propellerwellenisolator ausgeführt" kann im Sinne der vorliegenden Offenbarung gemeint sein, dass in diesem Fall der Propellerwellenisolator an die Stelle eines herkömmlichen Bauteils treten kann und nicht zwangsläufig in Form eines zusätzlich vorhandenen Gegenstands im elektrischen Bootsantrieb vorhanden sein muss. Dadurch wird aber nicht ausgeschlossen, dass der Propellerwellenisolator alternativ oder zusätzlich durch ein weiteres Bauteil bereitgestellt wird.

Dadurch, dass das erste Wellenlager und/oder das zweite Wellenlager einen Innenring und einen Außenring aufweisen, wobei der Innenring und/oder der Außenring des ersten Wellenlagers und/oder des zweiten Wellenlagers als Propellerwellenisolator ausgeführt sind, ergeben sich eine Vielzahl von Varianten.

Im Sinne der vorliegenden Offenbarung können die elektrischen Leitungskontakte zwischen Antriebsgehäuse und Propellerwelle rein über die Wellenlager verlaufen. Alle Varianten des ersten Ausführungsbeispiels können den Vorteil gemein haben, dass durch die Ausführung des Innenrings und/oder Außenrings als Propellerwellenisolator, bereits bestehende elektrische Bootsantrieben nachgerüstet bzw. aufgerüstet werden können. Dadurch, dass der Innenring mit der Propellerwelle und der Außenring mit dem Antriebsgehäuse in Kontakt stehen kann, kann an dem betreffenden Kontakt eine elektrische Isolation erzielt werden, wodurch die Ausbildung eines elektrochemischen Gradienten, die Ausbildung einer Anode und dadurch die Ausbildung einer galvanischen Zelle unterbunden werden kann. Dadurch kann eine galvanische Korrosion des Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden.

Die Innenringe bzw. Außenringe des ersten und zweiten Wellenlagers sind bevorzugt so ausgebildet, dass beide Wellenlager zumindest teilweise als Propellerwellenisolator ausgeführt sind, sodass beide Wellenlager elektrisch isolierend ausgebildet sind. Dabei müssen das erste Wellenlager und das zweite Wellenlager nicht identisch sein. Gleichwohl können das erste Wellenlager und das zweite Wellenlager identisch sein.

Gemäß einer Ausführungsform des elektrischen Bootsantriebs können das erste Wellenlager einen ersten Wälzkörpersatz und/oder das zweite Wellenlager einen zweiten Wälzkörpersatz umfassen, wobei der erste Wälzkörpersatz und/oder der zweite Wälzkörpersatz als Propellerwellenisolator ausgeführt sein können.

Unter einen Wälzkörpersatz kann im Sinne der vorliegenden Offenbarung eine Menge von Wälzkörpern gemeint sein, die in einem betreffenden Wellenlager vorhanden sind. Ein Wälzkörpersatz eines Wellenlagers kann im Sinne der vorliegenden Offenbarung zwischen dem Außenring und dem Innenring des betreffenden Wellenlagers vorhanden sein.

Dadurch, dass der erste Wälzkörpersatz und/oder der zweite Wälzkörpersatz als Propellerwellenisolator ausgeführt sind, kann zwischen dem Innenring und dem Außenring des betreffenden Wellenlagers eine elektrische Isolation erzielt werden. Dadurch kann die Ausbildung eines elektrochemischen Gradienten, die Ausbildung einer Anode und die Ausbildung einer galvanischen Zelle unterbunden werden. Mithin kann eine galvanische Korrosion des metallischen Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden. In einer bevorzugten Weiterbildung kann das Wälzlager auch über einen Isolator, der zwischen dem Außenring des Wälzlagers und dem Antriebsgehäuse angeordnet ist, isoliert werden. Der Isolator bildet dann den Propellerwellenisolator aus und kann beispielsweise in Form einer Keramikbuchse und/oder einer Kunststoffbuchse zur Aufnahme des Wälzlagers im Antriebsgehäuse ausgebildet sein. Der Propellerwellenisolator kann auch als Kunststoffrings oder Gummirings ausgebildet sein, der zwischen dem Außenring und dem Antriebsgehäuse angeordnet wird.

In einer bevorzugten Weiterbildung kann ein Isolator zur Ausbildung des Propellerwellenisolators auch zusätzlich oder alternativ zwischen dem Innenring des Wälzlagers und der Antriebswelle angeordnet sein.

Der Propellerwellenisolator kann auch in Form von Papier ausgebildet sein. Beispielsweise kann Papier zwischen dem Außenring und/oder Innenring des Wälzlagers und dem Antriebsgehäuse angeordnet sein und auf diese Weise der Propellerwellenisolator ausgebildet werden.

Ein Propellerwellenisolator kann auch durch eine isolierende Beschichtung ausgebildet sein. Beispielsweise kann eine isolierende Beschichtung auf dem Außenring und/oder in dem Innenring eines Wälzlagers und/oder in einem in dem Antriebsgehäuse vorgesehenen Lagersitz zur Aufnahme des Wälzlagers angeordnet sein.

Die vorliegende Offenbarung bezieht sich auch darauf, dass zwischen der Propellerwelle und dem Antriebsgehäuse ein Axiallager vorgesehen sein kann, und ein Propellerwellenisolator zwischen dem Antriebsgehäuse und der Propellerwelle ausgebildet sein kann.

Gemäß einer Ausführungsform des elektrischen Bootsantriebs kann der Propellerwellenisolator eine Lagerhülse mit einem Lagerhülseninnenraum aufweisen, wobei die Lagerhülse ausgebildet und eingerichtet sein kann, in das Antriebsgehäuse eingebaut zu werden und ausgebildet und eingerichtet sein kann, zumindest eines des ersten Wellenlagers und des zweiten Wellenlagers im Hülseninnenraum aufzunehmen.

Die Lagerhülse kann im Sinne der vorliegenden Offenbarung beispielsweise ausgebildet und eingerichtet sein, in das Antriebsgehäuse eingebaut zu werden, wenn diese im Antriebsgehäuse befestigbar ist. Die Lagerhülse kann auch schwimmend eingesetzt werden. Die Lagerhülse kann an zumindest einer Seite offen sein oder zumindest eine Öffnung aufweisen. Die Lagerhülse kann im Sinne der vorliegenden Offenbarung beispielsweise ausgebildet und eingerichtet sein, zumindest eines des ersten Wellenlagers und des zweiten Wellenlagers im Hülseninnenraum aufzunehmen, wenn das zumindest eine Wellenlager im eingebauten Zustand des Wellenlagers und der Lagerhülse zwischen Propellerwelle und Antriebsgehäuse kein elektrischer Kontakt ausgebildet wird. Dadurch kann die Ausbildung eines elektrochemischen Gradienten, die Ausbildung einer Anode und die Ausbildung einer galvanischen Zelle unterbunden werden. Mithin kann eine galvanische Korrosion des Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden.

Dadurch, dass der Propellerwellenisolator eine Lagerhülse mit einem Lagerhülseninnenraum aufweist, wobei die Lagerhülse ausgebildet und eingerichtet ist, zumindest eines des ersten Wellenlagers und des zweiten Wellenlagers im Hülseninnenraum aufzunehmen, kann die Lagerhülse auch so ausgebildet sein, dass diese sowohl das erste Wellenlager als auch das zweite Wellenlager im Hülseninneren aufnehmen kann. Dadurch kann eine Propellerwelle inklusiver aller Wellenlager vorab zusammengebaut werden und dann als fertige Baugruppe in das Antriebsgehäuse eingebaut werden. Ferner kann dadurch erreicht werden, dass selbst wenn leitende Fremdkörper zwischen Propellerwelle und Wellenlager gelangen, diese nicht zu einer elektrischen Kontaktierung zwischen Propellerwelle und Antriebsgehäuse führen können. Letztlich kann dadurch eine besonders hohe Sicherheit gegenüber elektrischer Kontaktierung von Propellerwelle und Antriebsgehäuse erreicht werden. Der Begriff Lagerhülse kann dabei im Sinne der vorliegenden Offenbarung breit verstanden werden. Dementsprechend muss die Lagerhülse nicht zwingend die Form einer herkömmlichen Hülse aufweisen, sondern kann beispielsweise auch ganz oder teilweise der Innenkontur des Antriebsgehäuses folgen. Dadurch kann eine leichte Integration der Lagerhülse in das Antriebsgehäuse erreicht werden.

Gemäß einer Ausführungsform des elektrischen Bootsantriebs kann der Propellerwellenisolator eine erste Lagerhülse mit einem ersten Lagerhülseninnenraum und eine zweite Lagerhülse mit einem zweiten Lagerhülseninnenraum aufweisen, wobei das erste Wellenlager im ersten Lagerhülseninnenraum der ersten Lagerhülse aufgenommen ist und wobei das zweite Wellenlager im zweiten Lagerhülseninnenraum der zweiten Lagerhülse aufgenommen ist.

Entsprechend kann gemäß dieser Ausführungsform jedem Wellenlager eine dezidierte Lagerhülse zugeordnet werden. Sowohl die erste Lagerhülse als auch die zweite Lagerhülse kann dabei ausgebildet und eingerichtet sein, in das Antriebsgehäuse eingebaut zu werden. Dadurch kann die Ausbildung eines elektrochemischen Gradienten, die Ausbildung einer Anode und die Ausbildung einer galvanischen Zelle unterbunden werden. Mithin kann eine galvanische Korrosion des metallischen Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden.

Gemäß einer Ausführungsform des elektrischen Bootsantriebs kann der Propellerwellenisolator eine Wellenhülse aufweisen, die ausgebildet und eingerichtet ist, drehstarr auf der Propellerwelle angeordnet zu werden. Im Sinne der vorliegenden Offenbarung kann die elektrische Kontaktierung zwischen Propellerwelle und Antriebsgehäuse am Ort der Wellenlagerung erfolgen. Damit der Propellerwellenisolator ausgebildet und eingerichtet ist, die Propellerwelle von dem Antriebsgehäuse elektrisch zu isolieren, kann die Wellenhülse gemäß der fünften Ausführungsform radial zwischen Propellerwelle und Wellenlagerung angeordnet sein. Um ihre Funktion zweckmäßig zu erfüllen, kann eine Wellenlagerung am Außenring und am Innenring fest mit dem angrenzenden Bauteil in Verbindung stehen. Entsprechend kann es erforderlich sein, die Wellenhülse drehstarr mit der Propellerwelle zu verbinden. Dies kann beispielsweise über eine Presspassung, mittels einer Verzahnung, mittels Passfeder oder mittels einer beliebigen anderen Welle-Nabe Verbindung erfolgen.

Dadurch, dass der Propellerwellenisolator eine Wellenhülse aufweist, die ausgebildet und eingerichtet ist, drehstarr auf der Propellerwelle angeordnet zu sein, kann die Ausbildung eines elektrochemischen Gradienten, die Ausbildung einer Anode und die Ausbildung einer galvanischen Zelle unterbunden werden. Mithin kann eine galvanische Korrosion des metallischen Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden.

Gemäß einer vorteilhaften Weiterbildung dieses Ausführungsbeispiels kann die Wellenhülse eine erste Wellenhülse, die mit dem ersten Wellenlager in Kontakt steht und eine zweite Wellenhülse, die mit dem zweiten Wellenlager in Kontakt steht, aufweisen. Dadurch kann jedem Wellenlager eine dezidierte Wellenhülse zugewiesen werden, wodurch die Ausbildung eines elektrochemischen Gradienten, die Ausbildung einer Anode und die Ausbildung einer galvanischen Zelle unterbunden werden kann. Mithin kann eine galvanische Korrosion des Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden.

Sind mehrere Wellenlager vorgesehen, können alle Wellenlager mit einem der oben genannten Propellerwellenisolator versehen werden. Es ist aber auch vorgesehen, dass einige oder alle der Wellenlager jeweils mit unterschiedlichen Propellerwellenisolatoren versehen werden.

Gemäß einer Ausführungsform kann der Propellerwellenisolator als Propellerwellenbeschichtung ausgeführt sein, wobei die Propellerwellenbeschichtung mittels Aufsprühen, Lackieren, Aufvulkanisieren, Kleben, Tauchbandlackieren und/oder Pulverbeschichten herstellbar sein kann. Auf diese Art und Weise können elektrisch nicht-leitende Materialien, wie etwa termoplastische Naturkautschuke, Synthesekautschuke, elastomere Kunststoffe aber auch Keramikpartikel und/oder nichtleitende Metalloxide als Propellerwellenbeschichtung auf die Propellerwelle aufgebracht werden, wodurch der Propellerwellenisolator ausgebildet werden kann. Dadurch kann auf einfache und sichere Art und Weise eine vollständige elektrische Isolation der Propellerwelle gegenüber dem Antriebsgehäuse erzielt werden, wodurch die Ausbildung eines elektrochemischen Gradienten, die Ausbildung einer Anode und die Ausbildung einer galvanischen Zelle unterbunden werden kann. Mithin kann eine galvanische Korrosion des metallischen Werkstoffes mit dem niedrigeren elektrischen Potential vermieden werden. Mit anderen Worten kann dadurch eine elektrische Leitung über den stofflichen Kontakt zwischen Propellerwelle und Antriebsgehäuse effektiv unterbunden werden. Dabei kann beispielsweise die Propellerwelle und/oder die Innenseite des Antriebsgehäuses und/oder andere Komponenten wie der Innenring und/oder der Außenring eines Lagers und/oder eine Lagerbuchse und/oder eine Lagerhülse entsprechend mit einer isolierenden Schicht versehen werden.

Gemäß einer bevorzugten Weiterbildung dieser Ausführungsform an die Propellerwellenbeschichtung im Wesentlichen vollflächig auf der Propellerwelle ausgebildet sein. Dadurch kann weiterhin zwischen der Propellerwelle und etwaig mit der Propellerwelle verbundenen Komponenten aus einem metallischen Werkstoff mit einem zum metallischen Werkstoff der Propellerwelle verschiedenen elektrischen Potenzial eine galvanische Korrosion unterbunden werden.

Bei einer Ausführung des Bootsantriebs, bei dem ein im Antriebsgehäuse aufgenommenes Getriebe vorgesehen ist, dessen Abtrieb mit der Propellerwelle verbunden ist oder dessen Abtrieb die Propellerwelle ausbildet, kann der Propellerwellenisolator auch zwischen dem Abtrieb des Getriebes und der Propellerwelle oder im Getriebe angeordnet sein. Das Getriebe kann auch als Ganzes gegenüber dem Antriebsgehäuse isoliert sein und auf diese Weise den Propellerwellenisolator ausbilden. Beispielsweise kann zwischen dem Getriebe, also beispielsweise einem Getriebegehäuse oder einem Getriebekäfig, und dem Antriebsgehäuse ein Isolator angeordnet sein. Der Isolator bildet dann den Propellerwellenisolator aus, weil er die Isolierung zwischen der Propellerwelle und dem Antriebsgehäuse bereitstellt. Der Isolator kann, wie oben beschrieben, beispielsweise eine Beschichtung, ein Kunststoff und/oder Gummiisolator und/oder eine Keramik und/oder ein Papier sein. Andere Arten von Isolatoren sind ebenfalls umfasst.

Weiterhin können auch Lagerungen im Getriebe so isolierend ausgebildet werden, wie oben bereits zu den Wellenlagern ausgeführt, um auf diese Weise den Propellerwellenisolator auszubilden. Es können auch einzelne Komponenten des Getriebes als Isolator ausgeführt werden, beispielsweise Zahnräder, Schnecken oder Kegelräder, die aus Kunststoff und/oder Keramik und/oder einen andere isolierenden Werkstoff ausgebildet werden, um auf diese Weise den Propellerwellenisolator auszubilden.

Weiterhin können die oben bezüglich der Anordnung von Isolatoren oder Isolatorkomponenten beschriebenen Ausführungen ebenfalls auf die Komponenten des im Antriebsgehäuse aufgenommenen Getriebes angewendet werden.

Erfindungsgemäß umfasst die Propellerwelle weiterhin einen Antriebspropeller, beispielsweise einen faltbaren Antriebspropeller, wobei der Antriebspropeller direkt auf der Propellerwelle befestigt sein kann. Dadurch, dass der Antriebspropeller direkt auf der Propellerwelle befestigt sein kann, kann auf ein Getriebe verzichtet werden und eine kompakte Bauart des elektrischen Bootsantriebs realisiert werden. Dies ist insbesondere vor dem Hintergrund, dass der elektrische Bootsantrieb einen Propellerwellenisolator aufweist, der ausgebildet und eingerichtet ist, die Propellerwelle und das Antriebsgehäuse voneinander elektrisch zu isolieren, vorteilhaft, denn nunmehr können sowohl die Propellerwelle als auch das Antriebsgehäuse ganz oder zumindest teilweise gleichzeitig in Wasser, insbesondere Meerwasser, eingetaucht sein.

Gemäß der Erfindung ist der Propellerwellenisolator ausgebildet und eingerichtet, die Propellerwelle von dem Antriebspropeller elektrisch zu isolieren. Dies kann etwa im Sinne der vorliegenden Offenbarung der Fall sein, wenn der Propellerwellenisolator als Propellerwellenbeschichtung ausgeführt ist und die Propellerwellenbeschichtung ferner im Bereich des Kontakts zwischen Propellerwelle und Antriebspropeller ausgebildet ist. Dadurch kann weiterhin zwischen der Propellerwelle und dem mit der Propellerwelle verbundenen Antriebspropeller, der einen metallischen Werkstoff mit einem zum metallischen Werkstoff der Propellerwelle verschiedenen elektrischen Potenzial aufweisen kann, eine galvanische Korrosion unterbunden werden. Dadurch kann auf einfache und sichere Art und Weise eine vollständige elektrische Isolation der Propellerwelle gegenüber dem Antriebsgehäuse und dem Antriebspropeller erzielt werden, wodurch die Ausbildung eines elektrochemischen Gradienten, die Ausbildung einer Anode und die Ausbildung einer galvanischen Zelle sowohl zwischen Propellerwelle und Antriebsgehäuse als auch zwischen Propellerwelle und Antriebspropeller unterbunden werden kann. Mithin kann eine galvanische Korrosion des Werkstoffes mit dem niedrigeren elektrischen Potential vermieden werden. Mit anderen Worten kann dadurch eine elektrische Leitung über den stofflichen Kontakt zwischen Propellerwelle, Antriebspropeller und Antriebsgehäuse effektiv unterbunden werden.

Die oben gestellte Aufgabe wird weiterhin durch einen Außenbordmotor mit den Merkmalen des Anspruchs 13 gelöst. Vorteilhafte Weiterbildungen des Außenbordmotors ergeben sich aus der vorliegenden Beschreibung und den Figuren.

Bevorzugt weist der Außenbordmotor einen Pylon zur Aufnahme des Bootsantriebs auf. Unter dem Pylon wird dabei insbesondere ein Gehäuseabschnitt des Außenbordmotors verstanden, der im Betrieb im Wasser eingetaucht ist und bevorzugt eine hydrodynamisch optimierte Außenkontur aufweist. Bevorzugt bildet das Antriebsgehäuse teilweise oder vollständig die Außenkontur des Pylons aus.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiel erfolgt dabei mit Bezug auf die begleitenden Zeichnungen.

### Kurze Beschreibung der Figuren

Bevorzugte weitere Ausführungsformen werden durch die nachfolgende Beschreibung der Figuren näher erläutert. Die Figuren 1-8 entsprechen nicht Anspruch 1.

### Dabei zeigen:

Figur 1 eine schematische Querschnittszeichnung eines elektrischen Bootsantriebs gemäß einer ersten Variante eines ersten Ausführungsbeispiels;
Figur 2 eine schematische Querschnittszeichnung eines elektrischen Bootsantriebs gemäß einer zweiten Variante des ersten Ausführungsbeispiels;
Figur 3 eine schematische Querschnittszeichnung eines elektrischen Bootsantriebs gemäß einer dritten Variante des ersten Ausführungsbeispiels;
Figur 4 eine schematische Querschnittszeichnung eines elektrischen Bootsantriebs gemäß einer vierten Variante des ersten Ausführungsbeispiels;
Figur 5 eine schematische Querschnittszeichnung eines elektrischen Bootsantriebs gemäß eines zweiten Ausführungsbeispiels;
Figur 6 eine schematische Querschnittszeichnung eines elektrischen Bootsantriebs gemäß eines dritten Ausführungsbeispiels;
Figur 7 eine schematische Querschnittszeichnung eines elektrischen Bootsantriebs gemäß eines vierten Ausführungsbeispiels;
Figur 8 eine schematische Querschnittszeichnung eines elektrischen Bootsantriebs gemäß eines fünften Ausführungsbeispiels;
   Seite 12 von 22
Figur 9 eine schematische Querschnittszeichnung eines elektrischen Bootsantriebs gemäß eines sechsten Ausführungsbeispiels; und
Figur 10 eine schematische Querschnittszeichnung eines Außenbordmotors.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

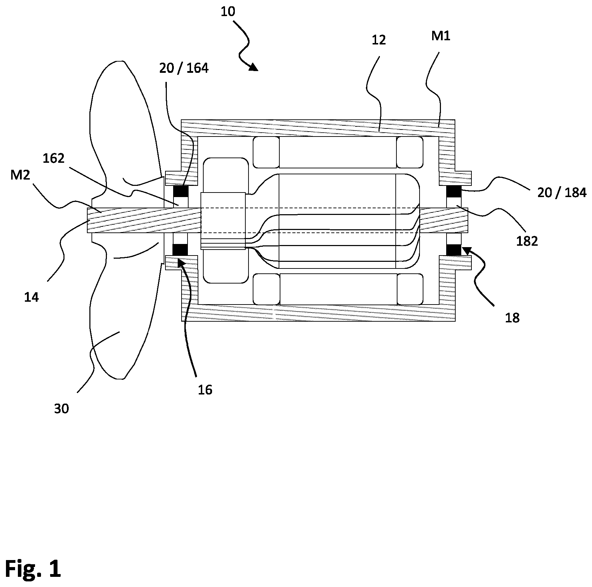

In Figur 1 ist eine schematische Querschnittszeichnung eines elektrischen Bootsantriebs 10 gemäß einer ersten Variante eines ersten Ausführungsbeispiels gezeigt.

Der Bootsantrieb 10 für ein Wasserfahrzeug umfasst ein Antriebsgehäuse 12 aus einem ersten metallischen Werkstoff M1 und eine Propellerwelle 14 aus einem zweiten metallischen Werkstoff M2. Die beiden unterschiedlichen metallischen Werkstoffe M1, M2 sind anhand unterschiedlicher Schraffuren in Figur 1 sowie allen weiteren Figuren kenntlich gemacht. Die Propellerwelle 14 ist mittels eines ersten Wellenlagers 16 und eines zweiten Wellenlagers 18 im Antriebsgehäuse 12 gelagert.

Des Weiteren weist der elektrische Bootsantrieb 10 einen Propellerwellenisolator 20 auf, der ausgebildet und eingerichtet ist, die Propellerwelle 14 von dem Antriebsgehäuse 12 elektrisch zu isolieren. Der erste metallische Werkstoff M1 kann eine Aluminiumlegierung aufweisen und der zweite metallische Werkstoff M2 kann eine Stahllegierung aufweisen. An einem aus dem Antriebsgehäuse 12 herausstehenden Ende der Propellerwelle 14 kann ein Antriebspropeller 30 befestigt sein.

Zwischen der Stahllegierung und der Aluminiumlegierung kann beispielsweise ein Potenzialunterschied von etwa 1 Volt herrschen. Da der Propellerwellenisolator 20 die Propellerwelle 14 von dem Antriebsgehäuse 12 elektrisch isoliert, kann selbst dann, wenn sowohl die Propellerwelle 14 als auch das Antriebsgehäuse 12 in einen Elektrolyt getaucht sind, kein elektrochemischer Gradient ausgebildet werden und damit keine galvanische Korrosion stattfinden. Im Ergebnis wird dadurch der metallische Werkstoff M1 mit dem niedrigeren elektrischen Potenzial, in diesem Fall die Aluminiumlegierung, keiner galvanischen Korrosion ausgesetzt.

Gemäß dem ersten Ausführungsbeispiel des elektrischen Bootsantriebs 10 kann das erste Wellenlager 16 und/oder das zweite Wellenlager 18 einen Innenring 162, 182 und einen Außenring 164, 184 aufweisen. Dabei können der Innenring 162, 182 und/oder der Außenring 164, 184 des ersten Wellenlagers 16 und/oder des zweiten Wellenlagers 18 als Propellerwellenisolator 20 ausgeführt sein. Die stoffliche Kontaktierung zwischen dem Antriebsgehäuse 12 und der Propellerwelle 14 kann dabei ausschließlich über das erste Wellenlager 16 und über das zweite Wellenlager 18 erfolgen.

Gemäß der ersten Variante des ersten Ausführungsbeispiels des elektrischen Bootsantriebs 10 können sowohl das erste Wellenlager 16 als auch das zweite Wellenlager 18 jeweils als ein Gleitlager ausgeführt sein. Dabei kann das erste als ein Gleitlager ausgeführte Wellenlager 16 einen Innenring 162 sowie einen Außenring 164 aufweisen. Das zweite als ein Gleitlager ausgeführte Wellenlager 18 kann einen Innenring 182 sowie einen Außenring 184 aufweisen. Gemäß der ersten Variante des ersten Ausführungsbeispiels des elektrischen Bootsantriebs 10 können jeweils der Außenring 164 des ersten Wellenlagers 16 und der Außenring 184 des zweiten Wellenlagers 18 als Propellerwellenisolator 20 ausgeführt sein. Dementsprechend kann die Propellerwelle 14 jeweils über die Außenringe 164, 184 der ersten und zweiten Wellenlager 16,18, die als Propellerwellenisolator ausgeführt sind, gegenüber dem Antriebsgehäuse 12 elektrisch isoliert sein. Die als Propellerwellenisolator 20 ausgeführten Außenringe 164, 184 können beispielsweise Kunststoff, Kautschuk, Glas und/oder einen Keramikwerkstoff umfassen.

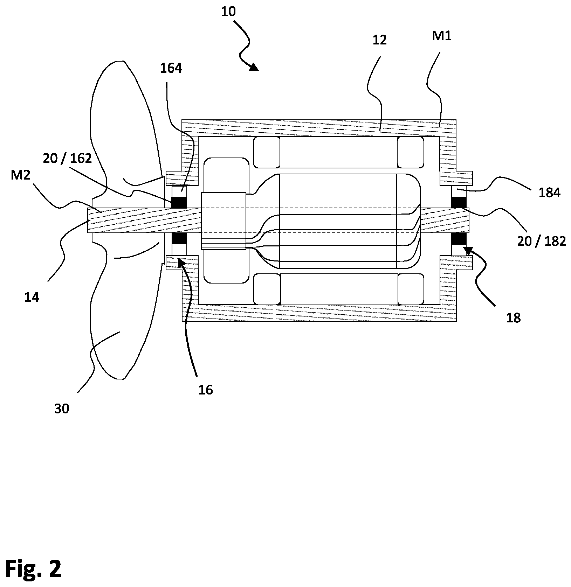

In Figur 2 ist eine schematische Querschnittszeichnung eines elektrischen Bootsantriebs 10 gemäß einer zweiten Variante des ersten Ausführungsbeispiels gezeigt. Gemäß der zweiten Variante des ersten Ausführungsbeispiels des elektrischen Bootsantriebs 10 kann sowohl das erste Wellenlager 16 als auch das zweite Wellenlager 18 jeweils als ein Gleitlager ausgeführt sein. Dabei kann das erste als ein Gleitlager ausgeführte Wellenlager 16 einen Innenring 162 sowie einen Außenring 164 aufweisen. Das zweite als ein Gleitlager ausgeführte Wellenlager 18 kann einen Innenring 182 sowie einen Außenring 184 aufweisen. Gemäß der zweiten Variante des ersten Ausführungsbeispiels des elektrischen Bootsantriebs 10 können jeweils der Innenring 162 des ersten Wellenlagers 16 und der Innenring 182 des zweiten Wellenlagers 18 als Propellerwellenisolator 20 ausgeführt sein. Dementsprechend kann die Propellerwelle 14 jeweils über die Innenringe 162, 182 der ersten und zweiten Wellenlager 16, 18, die als Propellerwellenisolator ausgeführt sind, gegenüber dem Antriebsgehäuse 12 elektrisch isoliert sein. Die als Propellerwellenisolator 20 ausgeführten Innenringe 162,182 können beispielsweise Kunststoff, Kautschuk, Glas und/oder einen Keramikwerkstoff umfassen.

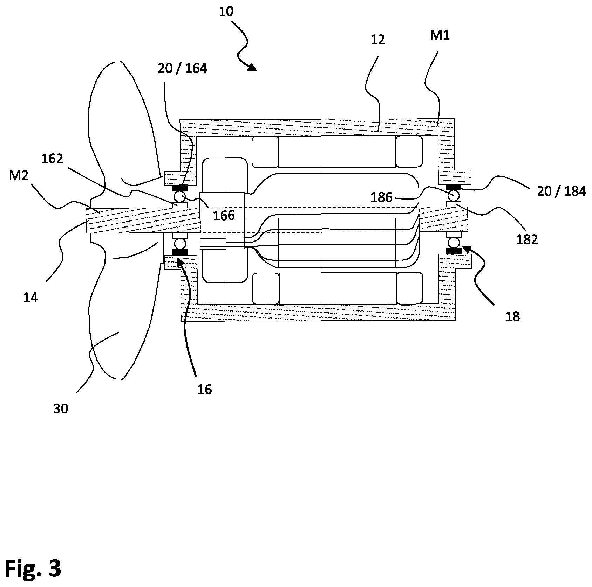

In Figur 3 ist eine schematische Querschnittszeichnung eines elektrischen Bootsantriebs 10 gemäß einer dritten Variante des ersten Ausführungsbeispiels gezeigt. Gemäß der dritten Variante des ersten Ausführungsbeispiels des elektrischen Bootsantriebs 10 können sowohl das erste Wellenlager 16 als auch das zweite Wellenlager 18 jeweils als ein Wälzlager ausgeführt sein. Dabei kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Gemäß der ersten Variante des ersten Ausführungsbeispiels des elektrischen Bootsantriebs 10 können jeweils der Außenring 164 des ersten Wellenlagers 16 und der Außenring 184 des zweiten Wellenlagers 18 als Propellerwellenisolator 20 ausgeführt sein. Dementsprechend können die Propellerwelle 14 jeweils über die Außenringe 164, 184 der ersten und zweiten Wellenlager 16, 18, die als Propellerwellenisolator ausgeführt sind, gegenüber dem Antriebsgehäuse 12 elektrisch isoliert sein. Die als Propellerwellenisolator 20 ausgeführten Außenringe 164, 184 können beispielsweise Kunststoff, Kautschuk, Glas und/oder einen Keramikwerkstoff umfassen.

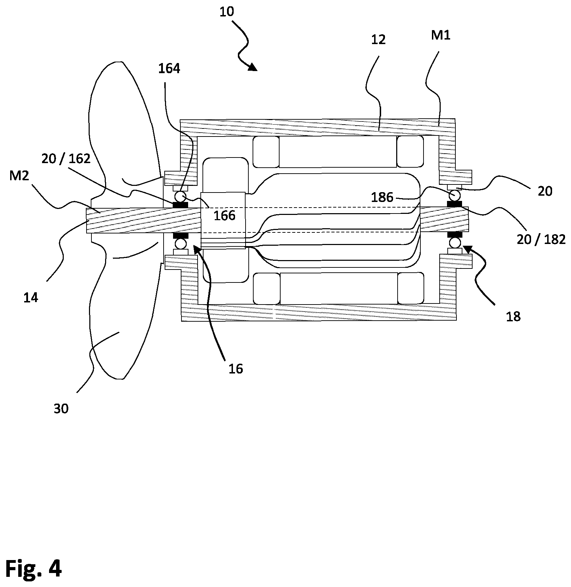

In Figur 4 ist eine schematische Querschnittszeichnung eines elektrischen Bootsantriebs 10 gemäß einer vierten Variante des ersten Ausführungsbeispiels gezeigt. Gemäß der vierten Variante des ersten Ausführungsbeispiels des elektrischen Bootsantriebs 10 können sowohl das erste Wellenlager 16 als auch das zweite Wellenlager 18 jeweils als ein Wälzlager ausgeführt sein. Dabei kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Gemäß der zweiten Variante des ersten Ausführungsbeispiels des elektrischen Bootsantriebs 10 können jeweils der Innenring 162 des ersten Wellenlagers 16 und der Innenring 182 des zweiten Wellenlagers 18 als Propellerwellenisolator 20 ausgeführt sein. Dementsprechend kann die Propellerwelle 14 jeweils über die Innenringe 162,182 der ersten und zweiten Wellenlager 16,18, die als Propellerwellenisolator ausgeführt sind, gegenüber dem Antriebsgehäuse 12 elektrisch isoliert sein. Die als Propellerwellenisolator 20 ausgeführten Innenringe 162,182 können beispielsweise Kunststoff, Kautschuk, Glas und/oder einen Keramikwerkstoff umfassen.

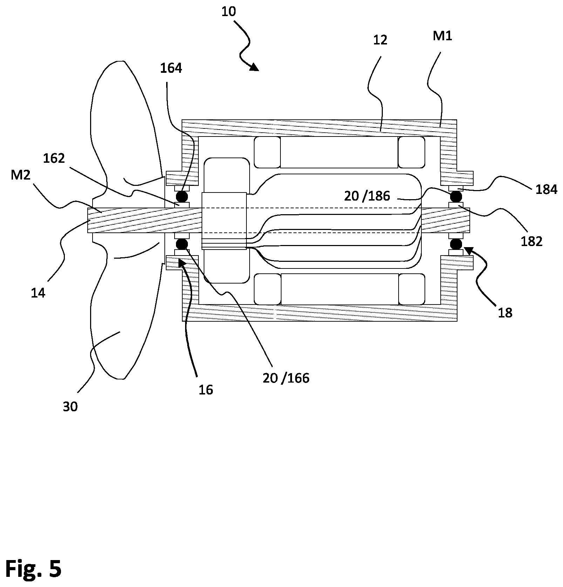

In Figur 5 ist eine schematische Querschnittszeichnung eines elektrischen Bootsantriebs 10 gemäß eines zweiten Ausführungsbeispiels gezeigt. Gemäß des zweiten Ausführungsbeispiels des elektrischen Bootsantriebs 10 können sowohl das erste Wellenlager 16 als auch das zweite Wellenlager 18 jeweils als ein Wälzlager ausgeführt sein. Dabei kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Ferner kann das erste Wellenlager 16 einen ersten Wälzkörpersatz 166 und/oder das zweite Wellenlager 18 einen zweiten Wälzkörpersatz 186 aufweisen. Der erste Wälzkörpersatz 166 und/oder der zweite Wälzkörpersatz 186 kann dabei als Propellerwellenisolator 20 ausgeführt sein.

Gemäß des zweiten Ausführungsbeispiels des elektrischen Bootsantriebs 10 können jeweils der erste Wälzkörpersatz 166 des ersten Wellenlagers 16 und der zweite Wälzkörpersatz 186 des zweiten Wellenlagers 18 als Propellerwellenisolator 20 ausgeführt sein. Dementsprechend kann die Propellerwelle 14 jeweils über die Wälzkörpersätze 166, 186 der ersten und zweiten Wellenlager 16,18, die als Propellerwellenisolator 20 ausgeführt sind, gegenüber dem Antriebsgehäuse 12 elektrisch isoliert sein. Die als Propellerwellenisolator 20 ausgeführten Wälzkörpersätze 166, 186 können beispielsweise Kunststoff, Kautschuk, Glas und/oder einen Keramikwerkstoff umfassen.

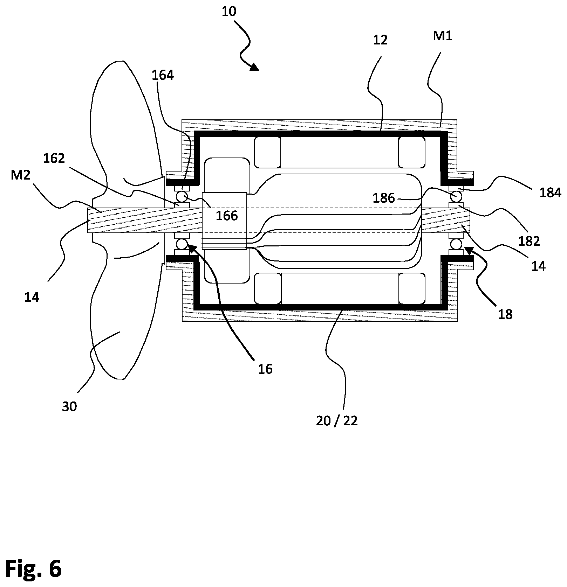

In Figur 6 ist eine schematische Querschnittszeichnung eines elektrischen Bootsantriebs 10 gemäß eines dritten Ausführungsbeispiels gezeigt. Gemäß des dritten Ausführungsbeispiels des elektrischen Bootsantriebs 10 kann sowohl das erste Wellenlager 16 als auch das zweite Wellenlager 18 jeweils als ein Wälzlager ausgeführt sein. Gleichwohl kann sowohl das erste Wellenlager 16 als auch das zweite Wellenlager 18 jeweils als ein Gleitlager ausgeführt sein. Gemäß der gezeigten Abbildung in Figur 6 kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Ferner können das erste Wellenlager 16 einen ersten Wälzkörpersatz 166 und das zweite Wellenlager 18 einen zweiten Wälzkörpersatz 186 aufweisen.

Gemäß des dritten Ausführungsbeispiels des elektrischen Bootsantriebs kann der Propellerwellenisolator 20 eine Lagerhülse 22 mit einem Lagerhülseninnenraum 24 aufweisen. Dabei kann die Lagerhülse 22 ausgebildet und eingerichtet sein, in das Antriebsgehäuse 12 eingebaut zu werden und ausgebildet und eingerichtet sein, zumindest eines des ersten Wellenlagers 16 und des zweiten Wellenlagers 18 im Hülseninnenraum 24 aufzunehmen. Beispielsweise kann die Lagerhülse 22 einen Lagerhülseninnenraum 24 mit einem veränderlichen Querschnitt aufweisen. Darüber hinaus kann die Lagerhülse 22 an beiden Seiten eine Öffnung aufweisen. Die Lagerhülse 22 kann darüber hinaus entlang des Gehäuseinneren des Antriebsgehäuses 12 ausgebildet sein und im Wesentlichen alle Komponenten des elektrischen Bootsantriebs 10, die sich im Inneren des Antriebsgehäuses 12 befinden, umfassen. Dadurch, dass der Propellerwellenisolator 20 eine Lagerhülse 22 aufweist bzw. als eine Lagerhülse 22 ausgeführt ist, kann die Propellerwelle 14 an ihren Kontaktstellen mit dem Antriebsgehäuse 12 elektrisch isoliert werden. Dementsprechend kann die Propellerwelle 14 jeweils im Bereich des ersten Wellenlagers 16 und des zweiten Wellenlagers 18 gegenüber dem Antriebsgehäuse 12 elektrisch isoliert sein. Die als Propellerwellenisolator 20 ausgeführte Lagerhülse 22 können beispielsweise Kunststoff, Kautschuk, Glas und/oder einen Keramikwerkstoff umfassen.

Die Lagerhülse 22 kann auch durch eine isolierende Beschichtung der Innenwände des Antriebsgehäuses 12 ausgebildet sein.

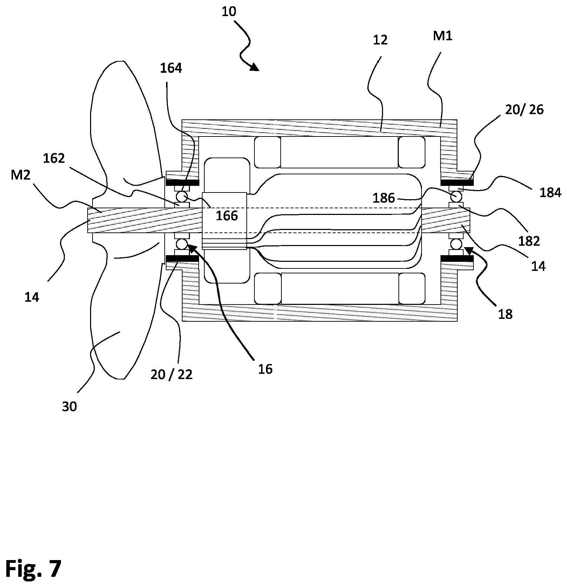

In Figur 7 ist eine schematische Querschnittszeichnung eines elektrischen Bootsantriebs 10 gemäß eines vierten Ausführungsbeispiels gezeigt. Gemäß des vierten Ausführungsbeispiels des elektrischen Bootsantriebs 10 kann sowohl das erste Wellenlager 16 als auch das zweite Wellenlager 18 jeweils als ein Wälzlager ausgeführt sein. Gleichwohl kann sowohl das erste Wellenlager 16 als auch das zweite Wellenlager 18 jeweils als ein Gleitlager ausgeführt sein. Gemäß der gezeigten Abbildung in Figur 7 kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Ferner kann das erste Wellenlager 16 einen ersten Wälzkörpersatz 166 und das zweite Wellenlager 18 einen zweiten Wälzkörpersatz 186 aufweisen.

Gemäß des vierten Ausführungsbeispiels des elektrischen Bootsantriebs kann der Propellerwellenisolator 20 eine erste Lagerhülse 22 mit einem ersten Lagerhülseninnenraum 24 und eine zweite Lagerhülse 26 mit einem zweiten Lagerhülseninnenraum 28 aufweisen. Dabei können die erste Lagerhülse 22 und die zweite Lagerhülse 26 ausgebildet und eingerichtet sein, in das Antriebsgehäuse 12 eingebaut zu werden. Dabei kann das erste Wellenlager 16 im ersten Lagerhülseninnenraum 24 der ersten Lagerhülse 22 aufgenommen sein und das zweite Wellenlager 18 im zweiten Lagerhülseninnenraum 28 der zweiten Lagerhülse aufgenommen sein.

Dadurch, dass der Propellerwellenisolator 20 eine erste Lagerhülse 22 und eine zweite Lagerhülse 26 aufweist bzw. als eine erste Lagerhülse 22 und eine zweite Lagerhülse 26 ausgeführt ist, kann die Propellerwelle 14 an ihren Kontaktstellen mit dem Antriebsgehäuse 12, elektrisch isoliert werden. Dementsprechend ist die Propellerwelle 14 jeweils im Bereich des ersten Wellenlagers 16 und des zweiten Wellenlagers 18 gegenüber dem Antriebsgehäuse 12 elektrisch isoliert. Die als Propellerwellenisolator 20 ausgeführten erste Lagerhülse 22 und zweite Lagerhülse 26 können beispielsweise Kunststoff, Kautschuk, Glas und/oder einen Keramikwerkstoff umfassen.

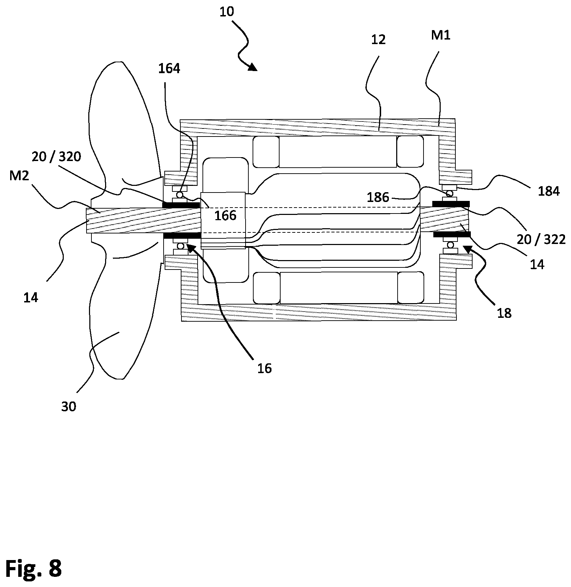

In Figur 8 ist eine schematische Querschnittszeichnung eines elektrischen Bootsantriebs 10 gemäß eines fünften Ausführungsbeispiels gezeigt. Gemäß des fünften Ausführungsbeispiels des elektrischen Bootsantriebs 10 kann sowohl das erste Wellenlager 16 als auch das zweite Wellenlager 18 jeweils als ein Wälzlager ausgeführt sein. Gleichwohl kann sowohl das erste Wellenlager 16 als auch das zweite Wellenlager 18 jeweils als ein Gleitlager ausgeführt sein. Gemäß der gezeigten Abbildung in Figur 8 kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Ferner kann das erste Wellenlager 16 einen ersten Wälzkörpersatz 166 und das zweite Wellenlager 18 einen zweiten Wälzkörpersatz 186 aufweisen.

Gemäß des fünften Ausführungsbeispiels eines elektrischen Bootsantriebs 10 kann der Propellerwellenisolator 20 eine Wellenhülse 32 aufweisen, die ausgebildet und eingerichtet ist, drehstarr auf der Propellerwelle 14 angeordnet zu werden. Dabei kann die Wellenhülse 32 eine erste Wellenhülse 320, die mit dem ersten Wellenlager 16 in Kontakt steht, und eine zweite Wellenhülse 322, die mit dem zweiten Wellenlager 18 in Kontakt steht, aufweisen.

Dadurch, dass der Propellerwellenisolator 20 eine Wellenhülse 32 aufweist, die ausgebildet und eingerichtet ist, drehstarr auf der Propellerwelle zur 14 angeordnet zu werden, kann die Propellerwelle 14 an ihren Kontaktstellen mit dem Antriebsgehäuse 12 elektrisch isoliert werden. Dadurch, dass die Wellenhülse 32 eine erste Wellenhülse 320, die mit dem ersten Wellenlager 16 in Kontakt steht und eine zweite Wellenhülse 322, die mit dem zweiten Wellenlager 18 in Kontakt steht aufweist, kann die Propellerwelle 14 an ihren Kontaktstellen mit dem Antriebsgehäuse 12 elektrisch isoliert werden. Entsprechend kann die Propellerwelle 14 jeweils im Bereich des ersten Wellenlagers 16 und des zweiten Wellenlagers 18 gegenüber dem Antriebsgehäuse zwölf elektrisch isoliert sein. Die als Propellerwellenisolator 20 ausgeführte Wellenhülse 32 bzw. als Propellerwellenisolator 20 ausgeführten erste Wellenhülse 320 und zweite Wellenhülse 322 können beispielsweise Kunststoff, Kautschuk, Glas und/oder einen Keramikwerkstoff umfassen.

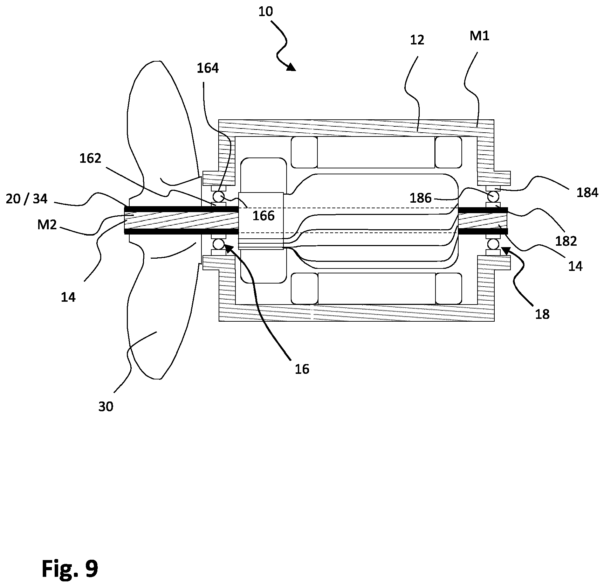

In Figur 9 ist eine schematische Querschnittszeichnung eines elektrischen Bootsantriebs 10 gemäß eines sechsten Ausführungsbeispiels gezeigt. Gemäß des sechsten Ausführungsbeispiels des elektrischen Bootsantriebs 10 kann sowohl das erste Wellenlager 16 als auch das zweite Wellenlager 18 jeweils als ein Wälzlager ausgeführt sein. Gleichwohl können sowohl das erste Wellenlager 16 als auch das zweite Wellenlager 18 jeweils als ein Gleitlager ausgeführt sein. Gemäß der gezeigten Abbildung in Figur 9 kann das erste als ein Wälzlager ausgeführte Wellenlager 16 einen Innenring 162 sowie einen Außenring 164 aufweisen. Das zweite als ein Wälzlager ausgeführte Wellenlager 18 kann einen Innenring 182 sowie einen Außenring 184 aufweisen. Ferner können das erste Wellenlager 16 einen ersten Wälzkörpersatz 166 und das zweite Wellenlager 18 einen zweiten Wälzkörpersatz 186 aufweisen.

Gemäß des sechsten Ausführungsbeispiels eines elektrischen Bootsantriebs 10 kann der Propellerwellenisolator 20 als Propellerwellenbeschichtung ausgeführt sein, wobei die Propellerwellenbeschichtung mittels Aufsprühen, Lackieren, Aufvulkanisieren, Kleben, Tauchbandlackieren und/oder Pulverbeschichten herstellbar sein kann. Dabei kann die Propellerwelle 14 weiterhin einen Antriebspropeller 30 umfassen, wobei der Antriebspropeller 30 direkt auf der Propellerwelle 14 befestigt sein kann. Dabei kann der Propellerwellenisolator 20 so ausgebildet und eingerichtet sein, die Propellerwelle 14 von dem Antriebspropeller 30 elektrisch zu isolieren.

Dadurch, dass der Propellerwellenisolator 20 als Propellerwellenbeschichtung ausgeführt ist, kann die Propellerwelle 14 an ihren Kontaktstellen mit dem Antriebsgehäuse 12 elektrisch isoliert werden. Dadurch, dass der Propellerwellenisolator 20 als Propellerwellenbeschichtung in einem Bereich, in dem die Propellerwelle 14 mit dem ersten Wellenlager 16 und dem zweiten Wellenlager 18 in Kontakt steht, kann die Propellerwelle 14 an ihren Kontaktstellen mit dem Antriebsgehäuse 12 elektrisch isoliert werden. Entsprechend kann die Propellerwelle 14 jeweils im Bereich des ersten Wellenlagers 16 und des zweiten Wellenlagers 18 gegenüber dem Antriebsgehäuse 12 elektrisch isoliert werden. Die als Propellerwellenisolator ausgeführte Propellerwellenbeschichtung kann beispielsweise Kunststoff, Kautschuk, Glas und/oder einen Keramikwerkstoff umfassen.

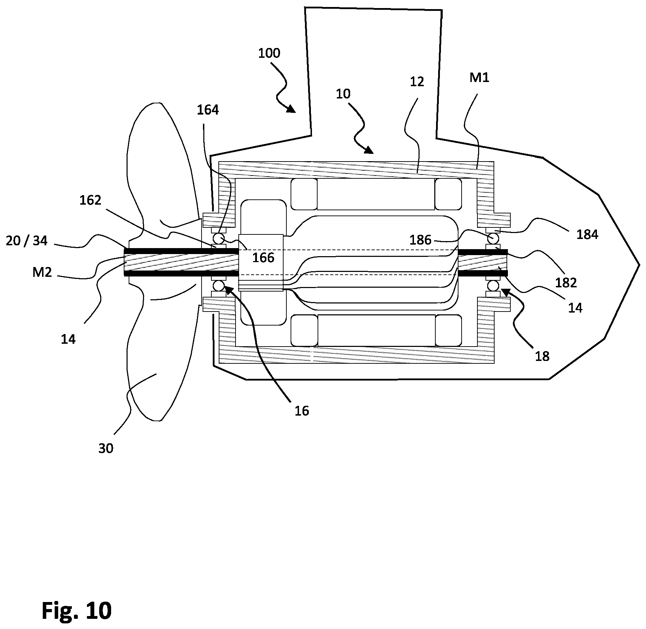

In Figur 10 ist eine schematische Querschnittszeichnung eines Außenbordmotors 100 gezeigt. Die im Außenbordmotor 100 gezeigte Ausführungsform des elektrischen Bootsantriebs 10 entspricht der sechsten Ausführungsform.

Das Gehäuse des Außenbordmotors 100 kann teilweise oder vollständig dem oben beschriebenen Antriebsgehäuse 12 aus dem ersten metallischen Werkstoff M1 entsprechen. Mit anderen Worten kann das Antriebsgehäuse 12 in seiner Außenkontur dem Pylon des Außenbordmotors 100 entsprechen.

In allen in den Figuren 1 bis 10 gezeigten Ausführungsbeispielen kann auch ein Getriebe vorgesehen sein, dessen Abtrieb die Propellerwelle 14 ausbildet beziehungsweise mit dieser verbunden ist. Entsprechend können auch einzelne Komponenten des Getriebes und/oder das Getriebegehäuse und/oder ein Getriebekäfig und/oder ein Zahnrad und/oder Schneckenrad und/oder Kegelrad des Getriebes isolierend ausgebildet sein, um die Propellerwelle 14 gegenüber dem Antriebsgehäuse 12 zu isolieren und auf diese Weise eine Propellerwellenisolierung bereit zu stellen. Die in diesem Zusammenhang beispielsweise vorgesehenen Kombinationen sind auch in der Darstellung der Erfindung beschrieben und können auch in Kombination mit den hier beschriebenen Ausführungsbeispielen eingesetzt werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- M1: erster metallischer Werkstoff
- M2: zweiter metallischer Werkstoff
- 10: Bootsantrieb
- 12: Antriebsgehäuse
- 14: Propellerwelle
- 16: erstes Wellenlager
- 18: zweites Wellenlager
- 20: Propellerwellenisolator
- 22: erste Lagerhülse
- 24: erster Lagerhülseninnenraum
- 26: zweite Lagerhülse
- 28: zweiter Lagerhülseninnenraum
- 30: Antriebspropeller
- 32: Wellenhülse
- 34: Propellerwellenbeschichtung
- 100: Außenbordmotor
- 162: Innenring des ersten Wellenlagers
- 164: Außenring des ersten Wellenlagers
- 166: Wälzkörpersatz des ersten Wellenlagers
- 182: Innenring des zweiten Wellenlagers
- 184: Außenring des zweiten Wellenlagers
- 186: Wälzkörpersatz des zweiten Wellenlagers
- 320: erste Wellenlagerhülse
- 322: zweite Wellenlagerhülse

## Patentansprüche

1. Bootsantrieb (10) zum Antreiben eines Wasserfahrzeugs, umfassend ein Antriebsgehäuse (12) aus einem ersten metallischen Werkstoff (M1) und eine Propellerwelle (14) aus einem zweiten metallischen Werkstoff (M2), wobei die Propellerwelle (14) im Antriebsgehäuse (12) gelagert ist und einen Antriebspropeller (30) umfasst,
**gekennzeichnet durch**
einen Propellerwellenisolator (20), der ausgebildet und eingerichtet ist, die Propellerwelle (14) von dem Antriebsgehäuse (12) und die Propellerwelle (14) von dem Antriebspropeller (30) elektrisch zu isolieren.

2. Bootsantrieb (10) nach Anspruch 1, **dadurch gekennzeichnet, dass** der erste metallische Werkstoff (M1) Aluminium aufweist und der zweite metallische Werkstoff Stahl (M2), insbesondere Edelstahl, aufweist.

3. Bootsantrieb (10) nach einem der Ansprüche 1 oder 2, **dadurch gekennzeichnet, dass** der Propellerwellenisolator (20) Kunststoff und/oder Kautschuk und/oder Glas und/oder einen Keramikwerkstoff und/oder Papier umfasst.

4. Bootsantrieb (10) nach einem der vorherigen Ansprüche, **dadurch gekennzeichnet, dass** die Propellerwelle (14) mittels eines ersten Wellenlagers (16) und eines zweiten Wellenlagers (18) im Antriebsgehäuse (12) gelagert ist, wobei das erste Wellenlager (16) und/oder das zweite Wellenlager (18) einen Innenring (162; 182) und einen Außenring (164; 184) aufweisen, wobei der Innenring (162; 182) und/oder der Außenring (164; 184) des ersten Wellenlagers (16) und/oder des zweiten Wellenlagers (18) als Propellerwellenisolator (20) ausgeführt sind, und/oder
das erste Wellenlager (16) einen ersten Wälzkörpersatz (166) und/oder das zweite Wellenlager (18) einen zweiten Wälzkörpersatz (186) umfasst, wobei der erste Wälzkörpersatz (166) und/oder der zweite Wälzkörpersatz (186) als Propellerwellenisolator (20) ausgeführt sind.

5. Bootsantrieb (10) nach einem der vorherigen Ansprüche, **dadurch gekennzeichnet, dass** der Propellerwellenisolator (20) eine Lagerhülse (22) mit einem Lagerhülseninnenraum (24) aufweist, wobei die Lagerhülse (22) ausgebildet und eingerichtet ist, in das Antriebsgehäuse (12) eingebaut zu werden und ausgebildet und eingerichtet ist, zumindest eines des ersten Wellenlagers (16) und des zweiten Wellenlagers (18) im Hülseninnenraum (24) aufzunehmen.

6. Bootsantrieb (10) nach einem der vorherigen Ansprüche, **dadurch gekennzeichnet, dass** der Propellerwellenisolator (20) eine erste Lagerhülse (22) mit einem ersten Lagerhülseninnenraum (24) und eine zweite Lagerhülse (26) mit einem zweiten Lagerhülseninnenraum (28) aufweist, wobei das erste Wellenlager (16) im ersten Lagerhülsenraum (24) der ersten Lagerhülse (22) aufgenommen ist und wobei das zweite Wellenlager (18) im zweiten Lagerhülseninnenraum (28) der zweiten Lagerhülse (26) aufgenommen ist.

7. Bootsantrieb (10) nach einem der vorherigen Ansprüche, **dadurch gekennzeichnet, dass** der Propellerwellenisolator (20) eine Wellenhülse (32) aufweist, die ausgebildet und eingerichtet ist, drehstarr auf der Propellerwelle (14) angeordnet zu werden.

8. Bootsantrieb (10) nach Anspruch 7, **dadurch gekennzeichnet, dass** die Wellenhülse (32) eine erste Wellenhülse (320), die mit dem ersten Wellenlager (16) in Kontakt steht und eine zweite Wellenhülse (322), die mit dem zweiten Wellenlager (18) in Kontakt steht, aufweist.

9. Bootsantrieb (10) nach einem der vorherigen Ansprüche, **dadurch gekennzeichnet, dass** der Propellerwellenisolator (20) als Propellerwellenbeschichtung ausgeführt ist, wobei die Propellerwellenbeschichtung mittels Aufsprühen, Lackieren, Aufvulkanisieren, Kleben, Tauchbandlackieren und/oder Pulverbeschichten herstellbar ist.

10. Bootsantrieb (10) nach einem der vorherigen Ansprüche, **dadurch gekennzeichnet, dass** der Antriebspropeller (30) direkt auf der Propellerwelle (14) befestigt ist.

11. Bootsantrieb (10) nach Anspruch 10, **dadurch gekennzeichnet, dass** der Antriebspropeller (30) ein faltbarer Antriebspropeller ist.

12. Bootsantrieb (10) nach einem der vorstehenden Ansprüche, **dadurch gekennzeichnet, dass** in dem Antriebsgehäuse (12) ein Getriebe angeordnet ist und das Getriebe eine als Propellerwellenisolator (20) ausgebildete elektrisch isolierende Komponente umfasst.

13. Außenbordmotor (100) für ein Wasserfahrzeug, umfassend einen elektrischen Bootsantrieb (10) nach einem der vorherigen Ansprüche.

14. Außenbordmotor (100) nach Anspruch 13, **dadurch gekennzeichnet, dass** ein Pylon zur Aufnahme des Bootsantriebs (10) vorgesehen ist und das Antriebsgehäuse (12) teilweise oder vollständig die Außenkontur des Pylons ausbildet.

## Claims

1. Boat drive (10) for driving a watercraft, comprising a drive housing (12) made of a first metallic material (M1) and a propeller shaft (14) made of a second metallic material (M2), wherein the propeller shaft (14) is mounted in the drive housing (12) and comprises a drive propeller (30),
**characterized by**
a propeller shaft insulator (20) which is configured and arranged to electrically insulate the propeller shaft (14) from the drive housing (12) and the propeller shaft (14) from the drive propeller (30).

2. Boat drive (10) according to claim 1, **characterized in that** the first metallic material (M1) comprises aluminium and the second metallic material comprises steel (M2), in particular stainless steel.

3. Boat drive (10) according to one of claims 1 or 2, **characterized in that** the propeller shaft insulator (20) comprises plastic and/or rubber and/or glass and/or a ceramic material and/or paper.

4. Boat drive (10) according to one of the preceding claims, **characterized in that** the propeller shaft (14) is mounted in the drive housing (12) by means of a first shaft bearing (16) and a second shaft bearing (18), wherein the first shaft bearing (16) and/or the second shaft bearing (18) comprise an inner ring (162; 182) and an outer ring (164; 184), wherein the inner ring (162; 182) and/or the outer ring (164; 184) of the first shaft bearing (16) and/or of the second shaft bearing (18) are provided in the form of the propeller shaft insulator (20), and/or
the first shaft bearing (16) comprises a first rolling element set (166) and/or the second shaft bearing (18) comprises a second rolling element set (186), wherein the first rolling element set (166) and/or the second rolling element set (186) are provided in the form of the propeller shaft insulator (20).

5. Boat drive (10) according to one of the preceding claims, **characterized in that** the propeller shaft insulator (20) comprises a bearing sleeve (22) with a bearing sleeve interior (24), wherein the bearing sleeve (22) is designed and set up to be installed in the drive housing (12) and is designed and set up to receive at least one of the first shaft bearing (16) and the second shaft bearing (18) in the sleeve interior (24).

6. Boat drive (10) according to one of the preceding claims, **characterized in that** the propeller shaft insulator (20) comprises a first bearing sleeve (22) with a first bearing sleeve interior (24) and a second bearing sleeve (26) with a second bearing sleeve interior (28), wherein the first shaft bearing (16) is received in the first bearing sleeve interior (24) of the first bearing sleeve (22) and wherein the second shaft bearing (18) is received in the second bearing sleeve interior (28) of the second bearing sleeve (26).

7. Boat drive (10) according to one of the preceding claims, **characterized in that** the propeller shaft insulator (20) comprises a shaft sleeve (32) which is designed and set up to be arranged rotationally rigidly on the propeller shaft (14).

8. Boat drive (10) according to claim 7, **characterized in that** the shaft sleeve (32) comprises a first shaft sleeve (320) which is in contact with the first shaft bearing (16) and a second shaft sleeve (322) which is in contact with the second shaft bearing (18).

9. Boat drive (10) according to one of the preceding claims, **characterized in that** the propeller shaft insulator (20) is designed as propeller shaft coating, wherein the propeller shaft coating can be produced by means of spraying on, painting on, vulcanizing on, adhesive bonding, dip coating and/or powder coating.

10. Boat drive (10) according to one of the preceding claims, **characterized in that** the drive propeller (30) is fastened directly on the propeller shaft (14).

11. Boat drive (10) according to claim 10, **characterized in that** the drive propeller (30) is a foldable drive propeller.

12. Boat drive (10) according to one of the preceding claims, **characterized in that** a transmission is arranged in the drive housing (12) and the transmission comprises an electrically insulating component designed as propeller shaft insulator (20).

13. Outboard motor (100) for a watercraft, comprising an electric boat drive (10) according to one of the preceding claims.

14. Outboard motor (100) according to claim 13, **characterized in that** a pylon is provided for receiving the boat drive (10) and the drive housing (12) partially or completely forms the outer contour of the pylon.

## Revendications

1. Entraînement de bateau (10) pour l'entraînement d'un bateau, comprenant un carter d'entraînement (12) en un premier matériau métallique (M1) et un arbre d'hélice (14) en un deuxième matériau métallique (M2), l'arbre d'hélice (14) étant monté dans le carter d'entraînement (12) et comprenant une hélice d'entraînement (30),
**caractérisé par**
un isolateur d'arbre d'hélice (20) qui est réalisé et conçu pour isoler électriquement l'arbre d'hélice (14) du carter d'entraînement (12) et l'arbre d'hélice (14) de l'hélice d'entraînement (30).

2. Entraînement de bateau (10) selon la revendication 1, **caractérisé en ce que** le premier matériau métallique (M1) comprend de l'aluminium et le deuxième matériau métallique comprend de l'acier (M2), en particulier de l'acier inoxydable.

3. Entraînement de bateau (10) selon l'une quelconque des revendications 1 ou 2, **caractérisé en ce que** l'isolateur d'arbre d'hélice (20) comprend du plastique et/ou du caoutchouc et/ou du verre et/ou un matériau céramique et/ou du papier.

4. Entraînement de bateau (10) selon l'une quelconque des revendications précédentes, **caractérisé en ce que** l'arbre d'hélice (14) est monté dans le carter d'entraînement (12) au moyen d'un premier palier d'arbre (16) et d'un deuxième palier d'arbre (18), le premier palier d'arbre (16) et/ou le deuxième palier d'arbre (18) présentant une bague intérieure (162 ; 182) et une bague extérieure (164 ; 184), la bague intérieure (162 ; 182) et/ou la bague extérieure (164 ; 184) du premier palier d'arbre (16) et/ou du deuxième palier d'arbre (18) étant réalisées sous forme d'isolateur d'arbre d'hélice (20), et/ou
le premier palier d'arbre (16) comprenant un premier ensemble de corps de roulement (166) et/ou le deuxième palier d'arbre (18) comprenant un deuxième ensemble de corps de roulement (186), le premier ensemble de corps de roulement (166) et/ou le deuxième ensemble de corps de roulement (186) étant réalisés sous forme d'isolateur d'arbre d'hélice (20).

5. Entraînement de bateau (10) selon l'une quelconque des revendications précédentes, **caractérisé en ce que** l'isolateur d'arbre d'hélice (20) présente une douille de palier (22) avec un espace intérieur de douille de palier (24), la douille de palier (22) étant réalisée et conçue pour être installée dans le carter d'entraînement (12) et étant réalisée et conçue pour recevoir au moins l'un du premier palier d'arbre (16) et du deuxième palier d'arbre (18) dans l'espace intérieur de douille (24).

6. Entraînement de bateau (10) selon l'une quelconque des revendications précédentes, **caractérisé en ce que** l'isolateur d'arbre d'hélice (20) présente une première douille de palier (22) avec un premier espace intérieur de douille de palier (24) et une deuxième douille de palier (26) avec un deuxième espace intérieur de douille de palier (28), le premier palier d'arbre (16) étant reçu dans le premier espace de douille de palier (24) de la première douille de palier (22) et le deuxième palier d'arbre (18) étant reçu dans le deuxième espace intérieur de douille de palier (28) de la deuxième douille de palier (26).

7. Entraînement de bateau (10) selon l'une quelconque des revendications précédentes, **caractérisé en ce que** l'isolateur d'arbre d'hélice (20) présente une douille d'arbre (32) qui est réalisée et conçue pour être disposée de manière solidaire en rotation sur l'arbre d'hélice (14).

8. Entraînement de bateau (10) selon la revendication 7, **caractérisé en ce que** la douille d'arbre (32) présente une première douille d'arbre (320) qui est en contact avec le premier palier d'arbre (16) et une deuxième douille d'arbre (322) qui est en contact avec le deuxième palier d'arbre (18).

9. Entraînement de bateau (10) selon l'une quelconque des revendications précédentes, **caractérisé en ce que** l'isolateur d'arbre d'hélice (20) est réalisé sous forme de revêtement d'arbre d'hélice, le revêtement d'arbre d'hélice pouvant être fabriqué par pulvérisation, vernissage, vulcanisation, collage, vernissage par bande d'immersion et/ou revêtement par poudre.

10. Entraînement de bateau (10) selon l'une quelconque des revendications précédentes, **caractérisé en ce que** l'hélice d'entraînement (30) est fixée directement sur l'arbre d'hélice (14).

11. Entraînement de bateau (10) selon la revendication 10, **caractérisé en ce que** l'hélice d'entraînement (30) est une hélice d'entraînement pliable.

12. Entraînement de bateau (10) selon l'une quelconque des revendications précédentes, **caractérisé en ce qu'**une transmission est disposée dans le carter d'entraînement (12) et la transmission comprend un composant électriquement isolant réalisé sous forme d'isolateur d'arbre d'hélice (20).

13. Moteur hors-bord (100) pour un bateau, comprenant un entraînement de bateau électrique (10) selon l'une quelconque des revendications précédentes.

14. Moteur hors-bord (100) selon la revendication 13, **caractérisé en ce qu'**un pylône est prévu pour recevoir l'entraînement de bateau (10) et le carter d'entraînement (12) forme partiellement ou complètement le contour extérieur du pylône.
